# EUROPEAN PATENT APPLICATION

(11) **EP 0 714 764 A2**
(43) Date of publication of application: **05.06.1996**
(21) Application number: 95308183.3
(22) Date of filing: 15.11.1995
(51) Int. Cl.: B32B 27/36

(54) **Improved impact resistant laminate**

(30) Priority: 02.12.1994 US 349170
(71) Applicant: GENERAL ELECTRIC COMPANY, Schenectady, NY 12345 (US)
(72) Inventor: Rosenquist, Niles Richard, Vanderburgh, Indiana 47714 (US)
(74) Representative: Szary, Anne Catherine

(57) **Abstract**

Security glazing laminates comprising a polycarbonate layer having a weight average molecular weight in excess of 31,500 provides improved impact resistance to forced entry.

## Description

### Field of the Invention

This invention relates to improved impact resistant laminates. More particularly, it relates to such laminates having a plurality of layers or laminae including a layer of polycarbonate of controlled molecular weight. The laminates are particularly characterized by resistance to spalling, cracking or other failure of the polycarbonate surface when the laminates are subject to impact.

### Background of the Invention

Safety glazing or penetration resistant glazing for structural items such as windows, windshields and the like utilizing polycarbonates, copolyesterpolycarbonates, or polysiloxane-polycarbonates and similar polycarbonate copolymers with resinous interlayers as their structural components are well known. Transparent shock and penetration resistant laminates constructed of glass and various plastics are well-known. Early versions of such laminates, such as disclosed in U. S. Patent 2,991,209, contained laminae of a hard resinous material such as polymethylmethacrylate along with glass laminae and were able to better resist shock and penetration than glass alone. Improvements in this technology have resulted in laminates having a greater number of layers or plies, a reduced glass content and an increased content of shock resistant resin. Conventional laminates, exemplary of this technology, utilize glass or a relatively hard solid resinous material as the impact or shock receiving layer while utilizing a polycarbonate layer as the back, inner, or downstream layer for the layer being presented to the person being protected.

Polycarbonate resins have become a common shock resistant resin in security glazing laminates. U. S. Patent 3,624,238 discloses the use of a polycarbonate lamina as the middle layer of a symmetrical and predominantly penetration resistant structure. U. S. patent 3,666,614 discloses laminated assemblies for use as structural windshields in motor vehicles. Glass-polycarbonate resin laminates are disclosed in U. S. Pat. No. 3,666,614, the glass and polycarbonate being sealed or joined together by an ethylene-vinyl acetate copolymer. In U.S. Pat. No. 3,520,768, there are disclosed laminates of relatively thick glass utilizing a thin polycarbonate foil disposed between glass sheets as the cohering material. These laminated assemblies are glass-polycarbonate laminates, for example, two ply laminates having a forward facing laminate of glass and a back laminate of polycarbonate bonded with an adhesive interlayer of ethylene-vinyl acetate. Optionally primers may be used to increase the adhesion of the laminate and also a mar-resistant coating may be applied to the external face of the polycarbonate lamina. U. S. patent 4,328,277 discloses a security glazing laminate having an adhesive material such as polydiorganosiloxane-polycarbonate block copolymer, and a back mar resistant polycarbonate of controlled thickness opposite the direction of impact or shock. U. S. patent 4,647,493 discloses a security glazing laminate preferably having at least one lamina of acrylic polymer, a lamina of glass or solid resinous material such as polycarbonate and at least one polydiorganosiloxane-polycarbonate block copolymer adhesive interlayer. U.S. patent 4,647,493 further discloses security glazing laminates possessing a plurality of internal and forward shock and penetration resistant thermoplastic laminae; a back polycarbonate lamina opposite the direction of impact varying in thickness with a plurality of compatible adhesive interlayers and an internal lamina of glass. U.S. patent 4,861,666 discloses asymmetric security glazing laminates bonded by a plurality of adhesive interlayers alternating between glass and polycarbonate from a front impact receiving lamina of glass to a back spall resistant and controlled thickness lamina of polycarbonate. In addition, there are known laminates wherein self-healing, chemically resistant polyurethane films or layers are adhered to glass, as for example, in U. S. Pat. No. 3,979,548. Moreover, there are also known, as disclosed in U. S. Pat. No. 4,027,072, laminates comprising polycarbonates and glass with polysiloxane-polycarbonate block copolymers, described more particularly hereinafter as the adhesive, the glass and polycarbonate layers in various combinations, and in which an ultraviolet, mar resistant, hard coat is utilized on at least one external surface or both external surfaces of such laminates. These last-mentioned laminates are particularly useful in structural items such as bullet resistant glass, windshields, windows and as transparencies for gas masks and the like. It is normal practice in the construction of certain of such laminates to utilize glass or relatively hard solid resinous materials as the impact shock receiving layers while utilizing polycarbonate as the back or inner or downstream layer or that presented to the person or objects being protected.

In those cases where polycarbonate is used as a layer of a laminate it is often, because of the relative softness of the polycarbonate, protected, especially on its exposed surface, with a mar- or scratch-resistant and transparency preserving layer usually less than 2 mils thick and preferable from about 0.05 to 1 mil thick. The minimum thickness is restricted only by application technology and the desired durability of the mar-resist coating. Maximum acceptable coating thickness is a function of the relative brittleness of the mar-resistant finish. The inner surface can also be so coated to prevent marring during lay-up and the like. In general, such mar-resistant layers, which are well known, can be metal oxides; modified melamines; ultra-violet hardenable organics such as acrylated monomers or mixtures of these monomers with acrylate-modified polymeric resins; inorganic glasses such as silica or alumina; polyurethanes; filled and unfilled silicone resins and silicone resins with recurring organic groups such as polymethyl methacrylate; polyamide ester resins; and ion-beam deposited carbon, and all of which, among others are harder and relatively more brittle than the underlying layer of polycarbonate which they protect The hard coating that has probably been the most widely employed in protecting polycarbonate glazing laminae are those based on colloidal silica coatings and exemplified by the disclosures in U. S. patents 4,239,798; 4,243,720; 4,298,632; and 4,308,317. Frequently a primer is necessary to insure good adhesion between the mar-resistant hardcoat and the underlying substrate.

It was found, however, that in impact shock resistant laminates utilizing relatively brittle hard coat layers along with the polycarbonate, that the relatively brittle material cracks under impact, causing the layer of polycarbonate and particularly the rear-most layer of polycarbonate to spall causing damage to exposed objects behind the laminate. Such spalling occurs because of the so-called "notch sensitive" character of polycarbonates. Thus in such laminates, if an overlying brittle layer is broken, the fracture lines propagate to the polycarbonate and act as "critical" notches causing the polycarbonate to fail in a brittle manner with little of the energy absorption typical of this normally impact-resistant material.

Such disadvantages were overcome by providing impact shock resistant laminates using polycarbonate overlying relatively more brittle material of specific thicknesses, thus achieving laminates which exhibit reduced notch sensitivity and thereby making them more useful from a practical point of view.

It is to be noted, however, that although the known laminates are useful in many areas such as, for example, those mentioned, they still present certain disadvantages even though they are characterized by superior penetration and spall resistance as well as being relatively light in weight and having good clarity, strength and integrity over a wide range of temperatures. For example, these known laminates are relatively thick and very often, after prolonged use, asymmetrical glass/polycarbonate laminates, in particular, show evidence of swelling, stress cracking, and even delamination. Furthermore, in such laminates which utilized polycarbonates, interlayers of adhesive are generally necessary for bonding the polycarbonates to glass or other structural materials. However, the interlayers or adhesives employed often have low adhesion to polycarbonates or are incompatible therewith, thus resulting in delamination, hazing and stress cracking.

Consequently, there exists a need for improved impact or shock resistant laminates which exhibit superior penetration and spall resistance and which, at the same time, are relatively thin, light in weight and have good claritv, strength and integrity over a wide range of temperatures and which at the same time provide abrasion, chemical and penetration resistance, The present invention provides such materials or laminates.

### Summary of the Invention

The present invention provides for an impact shock-resistant laminate comprising a plurality of laminae including a layer of polycarbonate of controlled molecular weight wherein the molecular weight of the polycarbonate is controlled to provide a better forced entry performance. By controlling the molecular weight of the polycarbonate, it has been unexpectedly found that the impact resistance can be improved at a constant sheet thickness, or conversely for constant performance, the sheet thickness may be decreased. Thus the present invention provides for an impact and shock resistant laminate comprising a plurality of laminae including a polycarbonate layer, wherein said polycarbonate has a molecular weight above about 31,500 which may further comprise a mar resistant coating on an exterior surface and which may further comprise a glass layer. The polycarbonates suitable for use in the laminates of the invention may additionally posses a melt flow ranging from about 0.6 to about 4.5 g/10 min. Thus the present invention provides an impact and shock resistant laminate comprising a plurality of laminae including a polycarbonate laver, wherein said polycarbonate has a molecular weight above about 31,500 whereby the forced entry performance of the laminate as measured by ASTM test F-1233 is improved and the present invention also further provides an impact and shock resistant laminate comprising a plurality of iaminae including a polycarbonate layer, wherein said polycarbonate has a molecular weight above about 31,500 whereby the forced entry performance of the laminate as measured by H. P. White test TP/0500.01 is improved.

### Description of the Invention

In accordance with the present invention there is provided impact shock-resistant laminates comprising a plurality of laminae including a layer of polycarbonate of controlled molecular weight. Layers of the specific material being used for each layer can be laid up to form the laminates. Such laminates can be used in sheet form and laid up in layers of the specific materials being utilized for each layer to form the laminates.

Insofar as polycarbonate resins are concerned, it is to be noted that a wide variety of the same may be utilized in the laminates of this invention, such polycarbonates including but not being limited to those described in U.S. Pat. numbers 3,161,615; 3,220,973; 3,312,659; 3,312,660; 3,313,777; 3,666,613; and 3,189,662 this last mentioned patent also disclosing polycarbonate block copolymers with polysiloxane, the use thereof in laminates being disclosed in U. S. Pat. No. 4,027,072, the teachings of all of which patents are incorporated herein by reference. The laminates of the present invention require that the weight average molecular weight of the polycarbonate polymer is in excess of about 31,500, more preferably in excess of about 32,000, and most preferably in excess of about 32,500. The molecular weight of the polycarbonate comprising layer may be significantly higher than 35,000, however as the molecular weight increases difficulties in thermoplastic processing also increase. Therefore, the ability to process these higher molecular weight resins into sheets, films or molded articles useful in the practice of this invention will have a tendency to be limited by chemical and physical issues associated with the processing equipment such as thermal degradation upon melting and the ability to process higher viscosity resins associated with the higher molecular weight of the resin. Advances in processing technology as well as stabilizer technology would be expected to simplify the use of higher molecular weight resins. Present technology appears to be preferably limited to a maximum molecular weight of 55,000 and greater ease of processing lowers this maximum to about 47,000.

The molecular weights defined above are weight average molecular weights determined by gel permeation chromatography (GPC) calibrated against polycarbonate standards of known molecular weight where the polycarbonate molecular weight has been determined by other confirming methods of molecular weight measurement. This is in contrast to the usual GPC weight average molecular weight determinations based on polystyrene standards where in the case of polycarbonate polymers the measurements may be in error by a factor varying as much as two to three times the true weight average molecular weight. Another defining characteristic of the resins sought to be employed by the laminae of the present invention is the property known as melt flow defined specifically as ASTM test number D1238 run at 300 °C using 1.2 kg. The polycarbonates suitable for use in the laminates of the present invention have melt flows ranging from 0.6 to 4.5 g/10 min., more preferably from 0.9 to 4.5 g/10 min., and most preferably from about 1.0 to 4.5 g/10 min.

Generally, layers of the laminae must be bonded to one another in some suitable fashion. These adhesive layers are interlayers and may be any suitable adhesive interlayer known to the art. These adhesive interlayers include among others, the polyvinylbutyrals, ethylene terpolymers, epoxies, polyurethanes, silicones, acrylics and ethylene acrylic acids, among others. Preferably the adhesive interlayer has a thickness of from 5 mils to about 60 mils, however this may vary depending on the choice of materials to be bonded and expected severity of use. The interlayer in contact with any polycarbonate layer or ply must not only provide good adhesion but also in the absence of protection for the polycarbonate must be chemically compatible with the sensitive unprotected polycarbonate resin, particularly as to its plasticizer content. The preferred interlayer for contact with the polycarbonate laminae is a polysiloxane-polycarbonate block copolymer, which typically does not contain any plasticizer.

Illustrative of the above block copolymer is General Electric LR-3320. This material has a specific gravity of 1.12, a tensile strength of 2500 to 3900 psi, an elongation of 230 to 430, a tear strength (Die C) of 230-430 lb./in., a brittleness temperature below - 76°F. and a heat deflection temperature (10 mils under 66 psi load) of 160°F.

Another such block copolymer, specifically General Electric LR-5630, has a specific gravity of 1.07, a tensile strength of 2200 to 2500 psi, and elongation of 500-700%, a tear strength (Die C) of 200 lb./in., and a brittleness temperature below 76° F. and a heat deflection temperature (66 psi) of 130°F.

While the above U.S. Pat. No. 3,189,662 states that the above block copolymers are useful as binding materials for parts and laminates and in adhesive formulations, it was unexpectedly found that when such materials are used in sheet form and laid up into laminates variously with other materials such as polycarbonates, other resins and glass, they provide not only excellent adhesive properties but in effect enter into and enhance the laminate structure, providing improved strength and ductility over an extremely wide range of temperatures. These physical characteristics, accompanied over such wide range of temperatures by salutary weather resistance and optical claritv make them particularly useful in so-called safety glazing applications where resistance to penetration and spalling is desirable, It is to be understood, of course, that while optical claritv and lack of color are desirable in many cases, one or of the layers of the laminates can be tinted or colored as desired to provided light screening and the like. It is also to be understood that light and heat stabilizers can be employed where indicated.

A wide variety of other materials can be used as the front or impact shock receiving layers in fabrication of the laminates of this invention, or as alternative interior laminae Such other materials include solid resinous materials, glass, and solid structural materials. Among the preferred resinous materials are the acrylate polymers derived from the various known monomers derived from acrylic acid esters and methacrylic acid esters and the like, including but not limited to the methyl, ethyl, isopropyl, butyl, tertiary butyl, and 2-ethylhexyl esters. A particularly preferred acrylate polymer is polymethylmethacrylate. The solid structural materials include wood, ceramics, metals, cermets and the like. Moreover, any of the usual types of glass used in so-called safety applications can be employed in conjunction with the other materials in fabricating the laminates of the present invention, including thermally strengthened or tempered glass, as well as common untempered glass.

The solid resinous materials which may be used in the laminates of this invention include ABS plastics based on combinations of acrylonitrile, butadiene and styrene; acetal homopolymers; acetal copolymers produced by polymerization of trioxane and ethylene oxide; acrylics including among others polyacrylates and polymethylmethacrylates; rubber modified acrylics; epoxy resins; nylons, such as those prepared from a diamine and a diacid and those prepared from an amino acid or amino acid derivative; phenolics; polycarbonates; phenylene oxide based resins, such as polyphenylene oxide and blends of polyphenylene oxide and styrene resins; polyaryl ethers, polyesters, polyethylenes; polyphenylene sulfides; polypropylene; polysulfones; polyurethanes; silicones; ethylene polymers, such as ethyl vinyl acetates; conductive plastics; and ordered aromatic copolymers and the like. These solid resinous materials can be formed into sheets and employed as other additional materials in fabricating the laminates of this invention and include in addition to the previously mentioned polycarbonates, the materials described in U.S. Pat. No. 3,622,440 which is incorporated herein by reference.

Where a layer of polycarbonate of controlled molecular weight without further description or designation is mentioned herein, it is the polycarbonate of bisphenol-A or 2,2-bis(4-hydroxphenol)propane. Polycarbonate is manufactured primarily by one of two methods. The first being the so-called interfacial polymerization of a phosgene derivative and a dihydric phenol, a multi-hydric phenol is employed if branching of the polymer is desired. The second is the so-called melt polymerization which is essentially a trans-esterification of a carbonate ester and a dihydric phenol. In both processes mono hydric phenols are utilized as chain stopping agents that regulate the average molecular weight of the resultant polyester polymer. Thus the mole fraction of mono-hydric chain stopping agents present in the polymerization reactor relative to the molar quantity of the repeating units of the polymer being built up will control the average molecular weight of the resultant polymer. This reaction has also been used to lower the molecular weight of such polymers by trans-esterifying the polymer in the presence of additional chain stopping molecules.

Where desirable, adhesion promoting primers can be used to promote adhesion, such materials being well known and including among others, vinyl alkoxy silanes, amino-alkoxy silanes, alkoxy silanes, silyl peroxides and amino-alkylalkoxy silanes. Such materials are described in the previously mentioned U.S. Pat. No. 3,666,614 and elsewhere.

While there are no limitations on the thickness or size of the laminates or on the number of layers that may be employed in the preparation of the same, it is a feature of this invention that the laminates comprise as small a number of lamina as possible thus providing thin, tough laminates which still exhibit all of the advantages of the relatively thick laminates of a similar tvpe that are currently known. In this connection, it is to be noted that in its simplest form, this invention comprises a single piece of polycarbonate of controlled molecular weight which may be laminated or coated. In this case, it would be desirable to employ a mar-resistant coating.

In those cases where polycarbonate is used as a layer of a laminate it is often, because of the relative softness of the polycarbonate, protected, especially on its exposed surface, with a mar- or scratch-resistant and transparency preserving layer usually less than 2 mils thick and preferable from about 0.05 to 1 mil thick. The minimum thickness is restricted only by application technology and the desired durability of the mar-resist coating. Maximum acceptable coating thickness is a function of the relative brittleness of the mar-resistant finish. The inner surface can also be so coated to prevent marring during lay-up and the like. In general, such mar-resistant layers, which are well known, can be metal oxides; modified melamines; ultra-violet hardenable organics such as acrylated monomers or mixtures of these monomers with acrylate-modified polymeric resins; inorganic glasses such as silica or alumina; polyurethanes; filled and unfilled silicone resins and silicone resins with recurring organic groups such as polymethyl methacrylate; polyamide ester resins; and ion-beam deposited carbon, and all of which, among others are harder and relatively more brittle than the underlying layer of polycarbonate which they protect. The hardcoat may be any of several of those known in the art. U. S. patent 4,478,876 discloses a process for coating a solid substrate such as polycarbonates, polyesters, polymethylmethacrylate, polyacrylates, and polyamides with an abrasion resistant silicone hardcoat. U.S. patent 3,707,397 discloses an organopolysiloxane hardcoat for polycarbonate. U. S. patent 3,843,390 discloses polyester melamines and acrylic melamine hardcoats. U. S. patent 2,332,461 discloses allyl resin hardcoats. The hard coating that has probably been the most widely employed in protecting polycarbonate glazing laminae are those based on colloidal silica coatings and exemplified by the disclosures in U. S. patents 4,239,798; 4,243,720; 4,298,632; and 4,308,317. Frequently a primer is necessary to insure good adhesion between the mar-resistant hardcoat and the underlying substrate.

The primer is a component, known in the art, that allows the hardcoat to be bonded to the substrate allowing for differences in the coefficient of thermal expansion. In those cases where there is not a good match in the coefficient of thermal expansion between the hardcoat and the substrate, the optional primer becomes desirable because it promotes adhesion between the two layers. Such primers are the subject of teachings and disclosures in the following U. S. patents: 4,313,979; 4,395,463; 4,477,499 and 4,559,271. More recently U. S. patent 5,041,313 is directed to a method for making silicone hardcoat composites and primer compositions therefor whereby the primer and hardcoat are applied to an aromatic thermoplastic substrate. Polycarbonate is such an aromatic thermoplastic.

If there is a sufficiently good match in the coefficient of thermal expansion between the hardcoat and the substrate, the primer becomes less desirable or unnecessary. The criterion to be employed in determining the desirability of employing the optional primer is whether a sufficient adhesion would exist between the substrate and the hardcoat such that the optional primer was not necessary to insure good adhesion. These same considerations apply to the hardcoat and any optional primer.

When glass is the substrate or a component of the laminate a match in the thermal coefficient of expansion between the glass and the other layers such as the primer and/or hardcoat and the substrate becomes a more significant consideration. It should be noted that if the laminate comprises a polycarbonate then ultraviolet stabilizers should be added to either or both of the hardcoat and the optional primer.

The means for adhering surface films to the substrate or core laminate may utilize a pressure sensitive adhesive. Suitable pressure sensitive adhesives may be any of several of those known in the art Acrylic based pressure sensitive adhesives are disclosed and enabled in U.S. patents RE 24,906; 3,558,574; 3,535,293; and 3,299,010. Silicone based pressure sensitive adhesives are disclosed and enabled in U.S. patents 2,857,356; 2,736,721; and 2,814,601. U. S. patent 4,370,358 discloses an ultraviolet light curable silicone that cures to a pressure sensitive adhesive. U.S. patent 4,791,163 discloses an aqueous emulsion of an organic pressure sensitive adhesive and a silicone based pressure sensitive adhesive. More recently, U.S. patent 5,190,827 discloses a solventless organopolysiloxane composition that cures to a pressure sensitive adhesive composition.

In this connection, it is to be noted that the laminates of this invention can be made thin enough, while still exhibiting advantageous properties, such as impact resistance, to fit easily into standard size glass frames, such as, for example, the 1 3/16" glass frames used in architectural applications. Furthermore, while the preferred material in the laminates of the invention is polycarbonate other materials additionally provide thickness to a given laminate, for example the thickness of laminae of other materials such as glass or acrylate plastics, the thicknesses of the adhesive, such as block copolymer interlayer are also contributors. While such materials should be employed in an amount to provide at least enough thereof to carry out their functions, the actual thickness of the component sheets or films thereof may vary widely.

The polycarbonate or polysiloxane, glass or other solid structural material and solid resinous materials may be used in any combinations. so long as at least a polycarbonate of controlled molecular weight lamina, is present and preferably a polysiloxane-polycarbonate is present as an interlayer when additional polycarbonate lamina are employed.

Thus, the laminate may contain, for example, as coating, a hardcoat, layer of polycarbonate, an interlayer of polysiloxane-polycarbonate and a layer of other material which may be a single ply layer of another suitable film, solid resinous material or solid structural material with optionally an ultra-violet, mar resistant hard coating or film. On the other hand, it is to be understood that the layer of other material may also be a multi-ply layer of suitable glazing laminae, solid resinous material, solid structural material with an optional ultra-violet, mar-resistant, hard coating or film and in which case any two or more of the mentioned components may be present in the multi-ply layer as individual plies. The mar-resistant hard film or coating is preferably present in cases where outboard layer of the laminate will be subjected to ultra-violet light such as sunlight. Among the preferred laminates of this invention are those having one or more layers of polycarbonate of controlled molecular weight with preferably polysiloxane-polycarbonate disposed between layers of the polycarbonate.

Laminates having a polysiloxane-polycarbonate interlayer disposed between a layer of polycarbonate of controlled molecular weight may be in turn provided with outboard and inboard coatings, including laminates having the same disposition of layers except that the outboard coat can also be provided with stabilizers for ultra-violet protection and those laminates having an interlayer of polysiloxane-polycarbonate disposed between layers and an inboard polycarbonate ply coated with a hard coat may have an outboard layer of glass.

On the other hand, it is a feature of this invention that the laminates thereof are most preferably made with a minimum number of layers each of which generally can be relatively thin, thus providing laminates having an overall greatly reduced thickness and which at the same time still provide excellent resistance to penetration failure and spalling when subjected to impact against the outboard lamina.

It is to be understood also and as previously mentioned that if desirable the impact receiving surface of a laminate of this invention can be coated with a relatively hard mar-resistant coating or a soft coating of polyurethane or other deferrable material.

It is to be further understood that the laminates of this invention may be bonded to other materials such as fiberglass reinforced plastic board, particle boards and the like which may be used for walls, partitions or other solid barriers and the like.

In preparing the laminates of this invention, the laminae or layers are laid up as desired and bonded by using pressure and/or heat or via the cast-in-place technique. The bonding can be accomplished by the use of presses, autoclaves, rollers, vacuum bags and the like all of such devices being known in the art.

The laminates of the present invention may be either symmetrical or asymmetrical with respect to the various structural and adhesive component laminae. Further the improvement afforded by the present invention is that by increasing the molecular weight of the polycarbonate the thickness of the polycarbonate layer may be reduced and still achieve the same performance in shock and penetration resistance tests. If the molecular weight of the polycarbonate resin is increased and the thickness of the polycarbonate lamina is kept constant with respect to prior art laminae, the performance of the security glazing laminate manufactured using the higher molecular weight polycarbonate resin is improved in forced entry testing relative to an identical laminate having a polycarbonate resin of lower molecular weight.

All of the U.S. Patents cited herein are hereby expressly incorporated by reference; specific attention is drawn to symmetric and asymmetric laminates, laminates possessing adhesive interlayers, mar resistant coatings, various stabilizers and the methods of manufacturing or assembling laminates which are taught and enabled in the incorporated references.

### Experimental

In order to illustrate the present invention more fully, the following examples thereof are set forth. It is to be understood that these examples are illustrative only and are not to be construed as limiting the invention to the particular embodiments set forth therein. In the examples all parts and percents are by weight unless otherwise indicated.

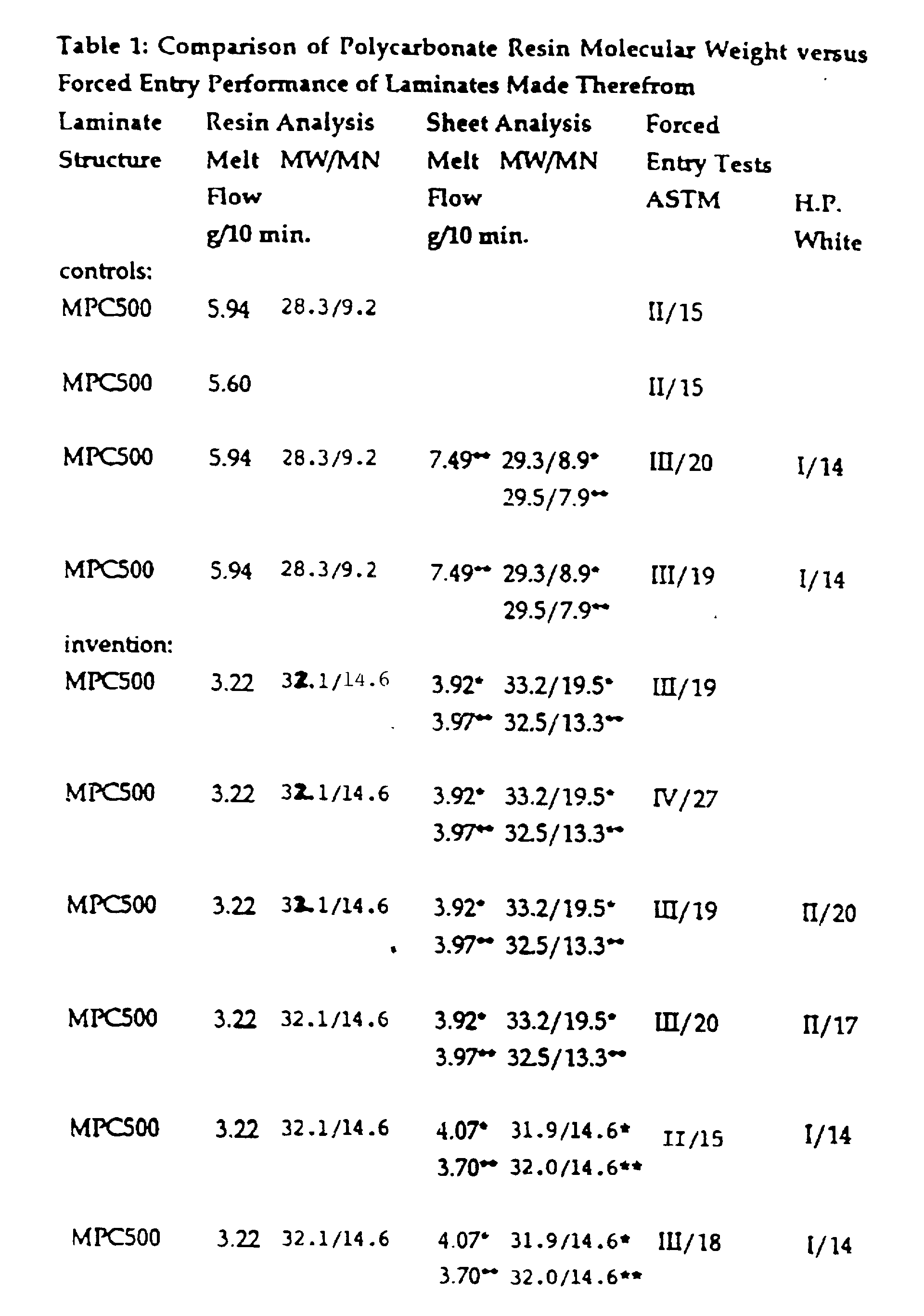

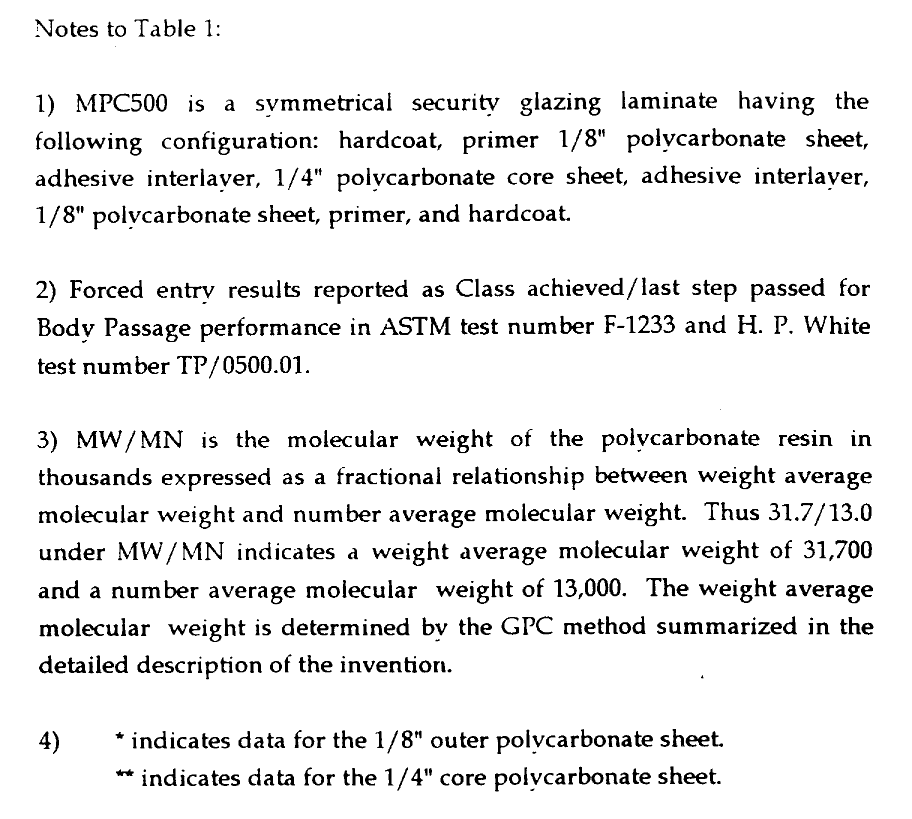

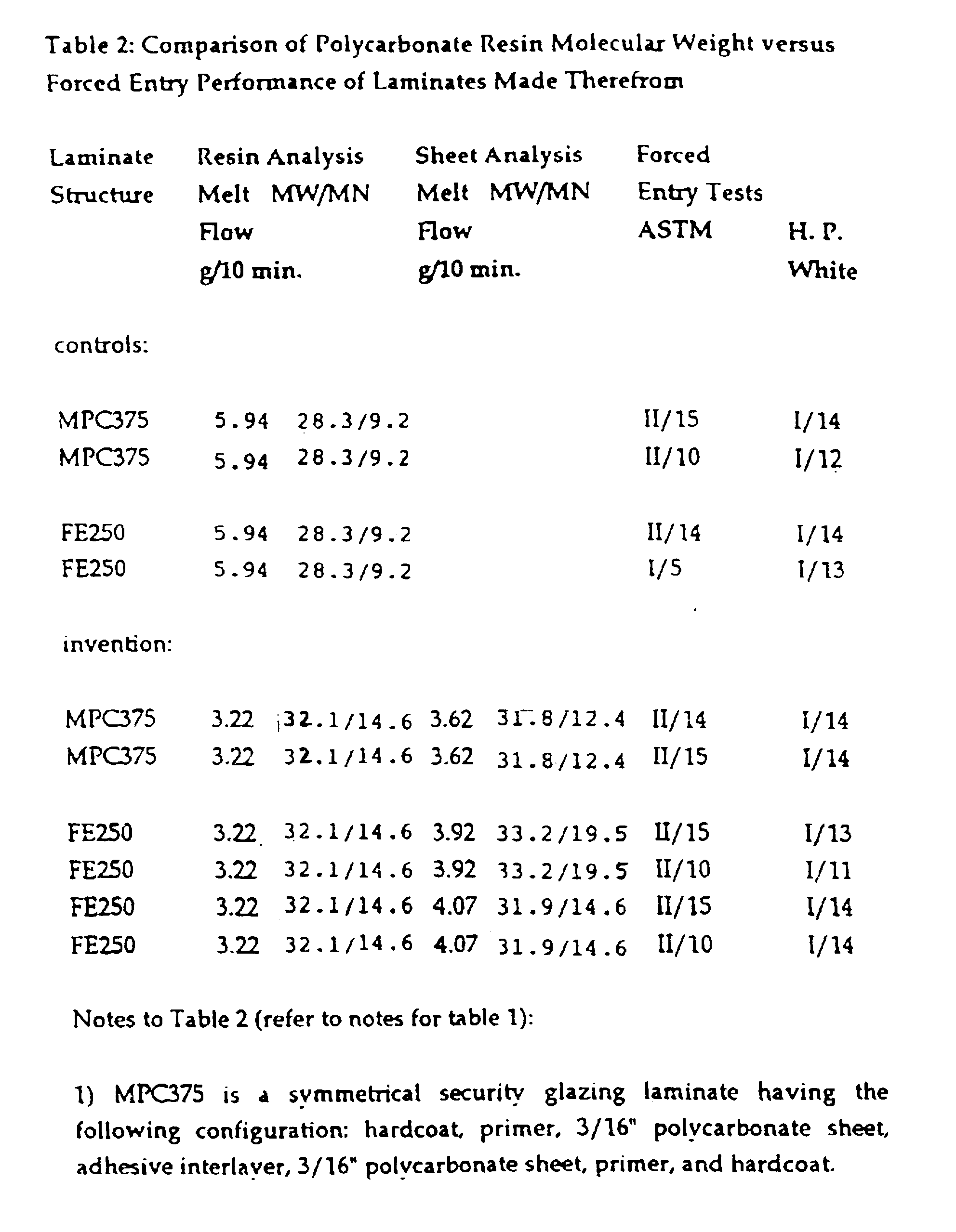

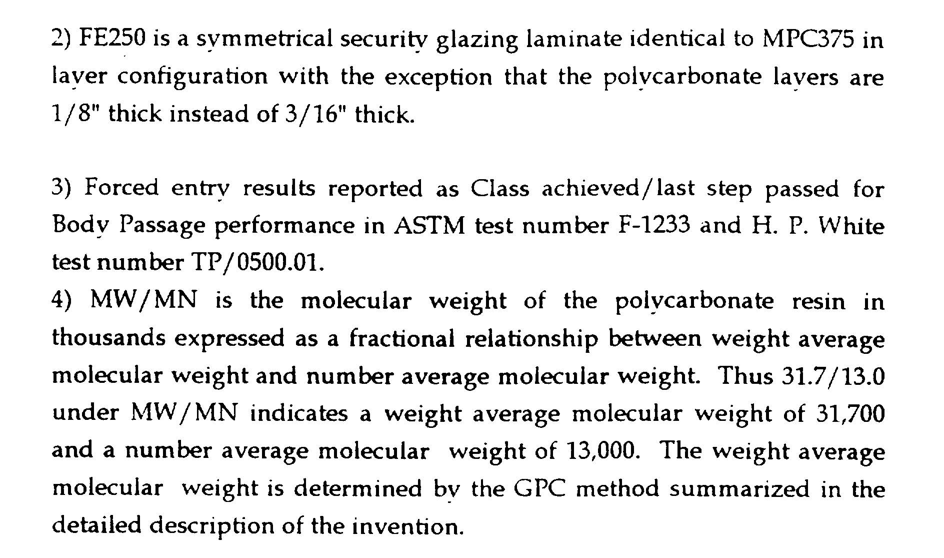

Inspection of Tables 1 and 2 shows a trend to improved forced entry performance for laminates of the invention utilizing a higher molecular weight polycarbonate relative to identical laminates utilizing a commercially available polycarbonate having a lower molecular weight Detailed analysis of the results indicates a certain scatter of the data, however the trend appears to be fairly well established that better forced entry performance is achieved when a higher molecular weight polycarbonate is substituted for a lower molecular weight polycarbonate, all other factors being as consistent or as constant as experimentally possible.

## Claims

1. An impact and shock resistant laminate comprising a plurality of laminae including a polycarbonate layer, wherein said polycarbonate has a molecular weight above about 31,500.

2. An impact and shock resistant laminate comprising a plurality of laminae including a polycarbonate layer, wherein said polycarbonate has a molecular weight above about 32,000.

3. An impact and shock resistant laminate comprising a plurality of laminae including a polycarbonate layer, wherein said polycarbonate has a molecular weight above about 32,5000.

4. A laminate according to any preceding claim further comprising a mar resistant coating on an exterior surface.

5. A laminate according to any preceding claim further comprising a layer selected from the group consisting of glass and acrylate polymers.

6. A laminate according to any preceding claim wherein said polycarbonate additionally possesses a melt flow ranging from about 0.6 to about 4.5 g/10 min.

7. A laminate according to any preceding claim wherein said polycarbonate additionally possesses a melt flow ranging from about 0.9 to about 4.5 g/10 min.

8. A laminate according to any preceding claim wherein said polycarbonate additionally possesses a melt flow ranging from about 1.0 to about 4.5 g/10 min.

9. An impact and shock resistant laminate comprising a plurality of laminae including a polycarbonate layer, wherein said polycarbonate has a melt flow ranging from about 0.6 to about 4.5 g/10 min.

10. The laminate of any preceding claim further comprising a lamina consisting of a polysiloxane-polycarbonate copolymer.
